# EUROPÄISCHE PATENTSCHRIFT

(11) **EP 2 150 338 B1**
(45) Veröffentlichungstag und Bekanntmachung des Hinweises auf die Patenterteilung: **27.02.2013**
(21) Anmeldenummer: 08750345.4
(22) Anmeldetag: 20.05.2008
(51) Int. Cl.: B01J 20/22, B01J 20/28, B01J 20/30, C07F 5/06, B01D 53/02, B01J 31/16, F17C 11/00

(54) **ALUMINIUM-AMINOCARBOXYLATE ALS PORÖSE METALLORGANISCHE GERÜSTMATERIALIEN**
ALUMINUM AMINO CAROBXYLATES AS POROUS ORGANOMETALLIC SKELETON MATERIALS
ALUMINIUM-AMINOCARBOXYLATE UTILISÉ EN TANT QUE MATÉRIAUX STRUCTURELS POREUX ET ORGANO-MÉTALLIQUES

(30) Priorität: 21.05.2007 EP 07108526
(43) Veröffentlichungstag der Anmeldung: 10.02.2010
(73) Patentinhaber: BASF SE, 67056 Ludwigshafen (DE)
(72) Erfinder: SCHUBERT, Markus, 67063 Ludwigshafen (DE); MÜLLER, Ulrich, 67435 Neustadt (DE); KIENER, Christoph, 67256 Weisenheim Am Sand (DE)
(86) Internationale Anmeldenummer: PCT/EP2008/056140
(87) Internationale Veröffentlichungsnummer: WO 2008/142059

(56) Entgegenhaltungen:
- WO-A-2007/023134
- WO-A-2007/113118
- WO-A-2007/131948
- WO-A-2008/061958
- WO-A-2008/062034
- ANDREW R MILLWARD ET AL: "Metal-Organic Frameworks with Exceptionally High Capacity for Storage of Carbon Dioxide at Room Temperature" JOURNAL OF THE AMERICAN CHEMICAL SOCIETY, AMERICAN CHEMICAL SOCIETY, WASHINGTON, DC.; US, US, Bd. 127, 12. Januar 2005 (2005-01-12), Seiten 17998-17999, XP007904150 ISSN: 0002-7863 & MILLWARD A R ET AL: "Metal-Organic Frameworks with Exceptionally High Capacity for Storage of Carbon Dioxide at Room Temperature" J. AM. CHEM. SOC., Bd. 127, 1. Dezember 2005 (2005-12-01), Seiten S1-S22, XP007904269
- SENKOVSKA I ET AL: "Solvent-Induced Pore-size Adjustment in the Metal-Organic Framework [Mg3(ndc)3(dmf)4] (ndc = naphthalenedicarboxylate)" EUROPEAN JOURNAL OF INORGANIC CHEMISTRY, WILEY-VCH VERLAG, WEINHEIM, DE, Bd. 2006, Nr. 122, 25. September 2006 (2006-09-25), Seiten 4564-4569, XP002467340 ISSN: 1434-1948
- LOISEAU T ET AL: "A Rationale for the Large Breathing of the Porous Aluminum Terephthalate (MIL-53) Upon Hydration" CHEMISTRY - A EUROPEAN JOURNAL, VCH PUBLISHERS, Bd. 10, Nr. 6, 15. März 2004 (2004-03-15), Seiten 1373-1382, XP002456416 ISSN: 0947-6539

## Beschreibung

Die vorliegende Erfindung betrifft ein poröses metallorganisches Gerüstmaterial, Formkörper dieses enthaltend sowie Verfahren zur Herstellung und deren Verwendung.

Poröse metallorganische Gerüstmaterialien sind im Stand der Technik bekannt. Sie zeichnen sich insbesondere durch ihre Porosität aus und sind häufig vergleichbaren Anwendungen zuführbar, welche von anorganischen Zeolithen bekannt sind.

Metallorganische Gerüstmaterialien enthalten üblicherweise eine an ein Metallion koordinativ gebundene, mindestens zweizähnige organische Verbindung, die gemeinsam mit dem Metallion das Gerüst des metallorganischen Gerüstmaterials darstellt.

Die geeignete Wahl von Metall und/oder organischer Verbindung ermöglicht eine Optimierung für das gewünschte Anwendungsgebiet. Hierbei kann beispielsweise die Wahl der organischen Verbindung Einfluss auf die Porenverteilung nehmen. Darüber hinaus kann das Metall einen Beitrag bei Adsorptionsvorgängen liefern.

Es existiert also ein stetiger Bedarf, spezielle metallorganische Gerüstmaterialien bereit zu stellen, die insbesondere außergewöhnliche Eigenschaften aufweisen, welche auf die Wahl des Metalls sowie der organischen Verbindung zurückzuführen sind.

Darüber hinaus hat sich gezeigt, dass durch Modifizierung der Herstellverfahren für metallorganische Gerüstmaterialien unterschiedliche Gerüstmaterialien erhalten werden können, obwohl diese aus dem gleichen Metall und der gleichen organischen Verbindung aufgebaut sind.

Ein solches Beispiel ist in WO 2008/052916 A1 beschrieben. Hierbei konnte Aluminiumnaphthalindicarboxylat als metallorganisches Gerüstmaterial durch Veränderung der Reaktionsbedingungen derart hergestellt werden, dass sich eine neue Struktur bildete. Das bislang bekannte Aluminiumnaphthalindicarboxylat als metallorganisches Gerüstmaterial wies eine so genannte "MIL-69"-Struktur auf. Ein weiteres Beispiel ist in WO 2008/129051 A2 beschrieben.

Auf Aluminium basierende metallorganische Gerüstmaterialien stellen interessante Stoffe dar, da aufgrund starker Koordinationsbindungen vergleichsweise robuste metallorganische Gerüstmaterialen erhalten werden können. Zudem ist das Al³⁺-Ion aufgrund seiner oktaedrischen Koordination prinzipiell geeignet, dreidimensionale Gerüstverbindungen aufzubauen. Weiterhin sind die als Einsatzstoff verwendbaren Salze des Aluminiums gut zugänglich und preiswert.

Schließlich ist auch aus US 2008/0121105 A1 bekannt, dass ein metallorganisches Gerüstmaterial basierend auf Aluminium und Aminoterephthalsäure ebenfalls in einer "MIL-53"-Struktur vorliegt.

Dieses Gerüstmaterial zeichnet sich insbesondere durch seine Verwendung als Adsorbens, insbesondere von Kohlendioxid aus.

WO 2007/023134 A1 beschreibt ein Verfahren zur Herstellung von metallorganischen Gerüstmaterialien Hauptgruppenmetallionen enthaltend.

A. R. Millward et al., J. Am. Chem. Soc. 127 (2005), 17998-17999, beschreiben metallorganische Gerüstmaterialien mit ausgesprochen hoher Kapazität für die Speicherung von Kohlendioxid bei Raumtemperatur.

I. Senkovska et al., Eur. J. Inorg. Chem. 2006, 4564-4569, beschreiben die Herstellung Magnesium-basierter metallorganischer Gerüstmaterialien mit 2,6-Naphthalindicarbonsäure als zweizähnigem Liganden.

T. Loiseau et al., Chem. Eur. J. 10 (2004), 1373-1382, beschreiben die Herstellung von MIL-53.

WO 2007/131948 A2 beschreibt ein Verfahren zur Herstellung poröser metallorganischer Gerüstmaterialien durch Oxidation mindestens eines Metalls.

WO 2008/061958 A1 beschreibt ein Verfahren zur Trennung von Kohlendioxid mit Hilfe eines porösen metallorganischen Gerüstmaterials.

WO 2008/062034 beschreibt ein Verfahren zur Trennung von Gasen mit Hilfe von porösen metallorganischen Gerüstmaterialien, wobei diese vor in Kontakt bringen einem Aktivierungsschritt unterworfen werden.

Trotz der im Stand der Technik bekannten metallorganischen Gerüstmaterialien besteht ein ständiger Bedarf an alternativen Gerüstmaterialien, die überlegene Eigenschaften insbesondere im Bezug auf die Speicherung und Trennung von Gasen aufweisen.

Insbesondere besteht ebenfalls ein Bedarf an alternativen Herstellverfahren, mit welchen neue poröse metallorganische Gerüstmaterialien hergestellt werden können, die auf bekannten Metallen und organischen Verbindungen beruhen.

Eine Aufgabe der vorliegenden Erfindung liegt somit darin, solche Gerüstmaterialien und Verfahren zur Verfügung zu stellen.

Die Aufgabe wird gelöst durch ein Verfahren zur Herstellung eines porösen metallorganischen Gerüstmaterials enthaltend eine an mindestens ein Metallion koordinativ gebundene mindestens zweizähnige organische Verbindung, wobei das mindestens eine Metallion Al^{III} ist und die mindestens zweizähnige organische Verbindung eine mit mindestens einer Aminogruppe substituierte aromatische Dicarbonsäure ausgewählt aus der Gruppe bestehend aus Terephthalsäure, 2,6-Naphthalindicarbonsäure, 1,4-Naphthalindicarbonsäure, 1,5-Naphthalindcarbonsäure und Derivaten davon ist, bei denen mindestens eine CH-Gruppe im Ring durch Stickstoff ersetzt ist, wobei das Gerüstmaterial in Pulverform eine spezifische Oberfläche nach Langmuir (N₂, 77 K) von mindestens 2500 m²/g aufweist, den Schritt enthaltend
- Umsetzung eines Reaktionsgemisches enthaltend eine Aluminium(III)-Verbindung, eine mindestens zweizähnige organische Verbindung, welche eine mit mindestens einer Aminogruppe substituierte aromatische Dicarbonsäure ist, ausgewählt aus der Gruppe bestehend aus Terephthalsäure, 2,6-Naphthalindicarbonsäure, 1,4-Naphthalindicarbonsäure, 1,5-Naphthalindicarbonsäure und Derivaten davon, bei denen mindestens eine CH-Gruppe im Ring durch Stickstoff ersetzt ist, oder eines ihrer Salze und ein organisches Lösemittel bei einer Temperatur im Bereich von 75°C bis 200°C, wobei das molare Verhältnis von Al^{III} zur substituierten aromatischen Dicarbonsäure kleiner 1 ist.

Darüber hinaus wird die Aufgabe gelöst durch ein poröses metallorganisches Gerüstmaterial erhältlich nach dem erfindungsgemäßen Verfahren zur Herstellung.

Es wurde gefunden, dass aromatische Dicarbonsäuren, die mit mindestens einer Aminogruppe substituiert sind, mit Aluminium poröse metallorganische Gerüstmaterialien ergeben, welche bislang nicht beschrieben wurden, wenn bei der Umsetzung gemäß dem erfindungsgemäßen Verfahren das molare Verhältnis von Al^{III} zur substituierten aromatischen Dicarbonsäure < 1 ist. Die so erhaltenen porösen metallorganischen Gerüstmaterialien weisen in Pulverform eine spezifische Oberfläche nach Langmuir auf, die weit über den entsprechenden Oberflächen für die im Stand der Technik bekannten Gerüstmaterialien auf Al-Basis aufweisen. Diese beträgt mindestens 2500 m²/g.

Bei der mindestens zweizähnigen organischen Verbindung, welche in erfindungsgemäßen porösen metallorganischen Gerüstmaterialien enthalten ist, handelt es sich um eine mit mindestens einer Aminogruppe substituierte aromatische Dicarbonsäure ausgewählt aus der Gruppe bestehend aus Therephthalsäure, 2,6-Naphthalindicarbonsäure, 1,4-Naphthalindicarbonsäure, 1,5-Naphthalindicarbonsäure und Derivaten davon, bei denen mindestens eine CH-Gruppe im Ring durch Stickstoff ersetzt ist.

Diese Säuren können in dem metallorganischen Gerüstmaterial als teilweise oder vollständig deprotonierte Carboxylate vorliegen.

Aminoterephthalsäurederivate, bei denen mindestens eine CH-Gruppe im Ring durch N ersetzt ist, ergeben entsprechende Pyridine, Pyridazine, Pyrimidine oder 1,2,4-Triazine. Derivate der Naphthalindicarbonsäuren sind insbesondere Dicarbonsäuren basierend auf Isochinolin, Chinolin, Phthalazin, 1,8-Naphthyridin, Chinoxalin, Chinazolin, Cinnolin sowie Pteridin.

Die aromatische Dicarbonsäure kann eine oder mehrere, beispielsweise zwei, drei oder vier Aminogruppen tragen. Vorzugsweise ist die aromatische Dicarbonsäure jedoch nur mit einer Aminogruppe substituiert. Unter einer Aminogruppe wird im Rahmen der vorliegenden Erfindung die funktionelle Gruppe NRR' verstanden, bei der R und R' unabhängig voneinander H, CH₃, C₂H₅, vorzugsweise H sind.

Als substituierte aromatische Dicarbonsäuren sind insbesondere Terephthalsäure und 2,6-Naphthalindicarbonsäure, insbesondere Terephthalsäure, bevorzugt.

Bei der aromatischen Dicarbonsäure handelt es sich vorzugsweise um 2-Aminoterephthalsäure.

Dementsprechend ist ein besonders bevorzugtes erfindungsgemäßes poröses metallorganisches Gerüstmaterial aus Aluminium und 2-Aminoterephthalsäure gebildet. Dieses weist im Röntgendiffraktogramm einen Basisreflexbereich von 2° < 2Θ < 7° auf. Vorzugweise im Bereich von 2,5° < 2Θ < 4°.

Bevorzugt befinden sich mehr als 40 % der höchsten 10 Reflexe bei 2Θ < 10°, mehr bevorzugt mehr als 60 %.

Die Elementarzusammensetzung beträgt hierbei für Al-2-Aminoterephthalat vorzugsweise weniger als 12 Gew.-%, mehr bevorzugt weniger als 10,5 Gew.-%, insbesondere im Bereich von 8,0 bis 9,5 Gew.-% Al und mehr als 30 Gew.-%, vorzugsweise im Bereich von 35 Gew.-% und 43 Gew.-% C.

Unter Basisreflex wird im Rahmen der vorliegenden Erfindung der jenige Reflex im Röntgendiffraktogramm (XRD) bezeichnet, welcher den höchsten Peak hervorruft.

Hierbei kann das Diffraktogramm wie folgt ermittelt werden: Die Probe wird als Pulver in den Probenbehälter eines kommerziell erhältlichen Geräts (Siemens D-5000 Diffraktometer oder Bruker D8-Advance) eingebaut. Als Strahlungsquelle wird Cu-Kα-Strahlung mit variablen Primär- und Sekundärblenden und Sekundärmonochromator benutzt. Die Detektion des Signals erfolgt über einen Szintillations- (Siemens) oder Solex-Halbleiter Detektor (Bruker). Der Messbereich für 2θ wird typischerweise zwischen 2° und 70 ° gewählt. Der Winkelschritt beträgt 0,02°, die Messzeit pro Winkelschritt typischerweise 2-4s. Bei der Auswertung werden Reflexe durch eine wenigstens 3-fach höhere Signalstärke vom Grundrauschen unterschieden. Die Flächenanalyse kann manuell erfolgen, indem an die einzelnen Reflexe eine Basislinie angelegt wird. Alternativ können Programme wie zum Beispiel "Topas-Profile" der Fa. Bruker eingesetzt werden, wobei die Untergrundanpassung dann bevorzugt über ein Polynom 1. Grades in der Software automatisch erfolgt.

Das erfindungsgemäße metallorganische Gerüstmaterial kann pulverförmig beziehungsweise als Agglomerat vorliegen.

Das erfindungsgemäße poröse metallorganische Gerüstmaterial kann als solches in Pulverform verwendet werden oder es wird in einen Formkörper umgewandelt.

Dementsprechend ist ein weiterer Aspekt der vorliegenden Erfindung, dass das erfindungsgemäße poröse metallorganische Gerüstmaterial als Pulver vorliegt.

Ein weiterer Aspekt der vorliegenden Erfindung ist demzufolge ein Formkörper enthaltend das erfindungsgemäße poröse metallorganische Gerüstmaterial.

Die Herstellung von Formkörpern aus metallorganischen Gerüstmaterialien ist beispielsweise in WO-A 03/102000 beschrieben.

Bevorzugte Verfahren zur Herstellung von Formkörpern sind hierbei die Verstrangung oder Tablettierung. Bei der Formkörperherstellung kann das Gerüstmaterial weitere Materialien, wie beispielsweise Binder, Gleitmittel oder andere Additive aufweisen, welche während der Herstellung hinzugesetzt werden. Ebenso ist es denkbar, dass das Gerüstmaterial weitere Bestandteile aufweist, wie zum Beispiel Adsorbentien wie Aktivkohle oder dergleichen.

Hinsichtlich der möglichen Geometrien der Formkörper existieren im Wesentlichen keine Beschränkungen. Beispielsweise sind unter anderem Pellets wie beispielsweise scheibenförmige Pellets, Pillen, Kugeln, Granulat, Extrudate wie beispielsweise Stränge, Waben, Gitter oder Hohlkörper zu nennen.

Zur Herstellung dieser Formkörper sind grundsätzlich sämtliche geeigneten Verfahren möglich. Es sind insbesondere folgende Verfahrensführungen bevorzugt:
- Kneten/Kollern des Gerüstmaterials allein oder zusammen mit mindestens einem Bindemittel und/oder mindestens einem Anteigungsmittel und/oder mindestens einer Templatverbindung unter Erhalt eines Gemisches; Verformen des erhaltenen Gemisches mittels mindestens einer geeigneten Methode wie beispielsweise Extrudieren; Optional Waschen und/oder Trocknen und/oder Calcinieren des Extrudates; Optional Konfektionieren.
- Tablettieren zusammen mit mindestens einem Bindemittel und/oder anderem Hilfsstoff.
- Aufbringen des Gerüstmaterials auf mindestens ein gegebenenfalls poröses Trägermaterial. Das erhaltene Material kann dann gemäß der vorstehend beschriebenen Methode zu einem Formkörper weiterverarbeitet werden.
- Aufbringen des Gerüstmaterials auf mindestens ein gegebenenfalls poröses Substrat.

Kneten/Kollern und Verformen kann gemäß eines jeden geeigneten Verfahrens erfolgen, wie beispielsweise in Ullmanns Enzyklopädie der Technischen Chemie, 4. Auflage, Band 2, S. 313 ff. (1972) beschrieben.

Beispielsweise kann das Kneten/Kollern und/oder Verformen mittels einer Kolbenpresse, Walzenpresse in Anwesenheit oder Abwesenheit mindestens eines Bindermaterials, Compoundieren, Pelletieren, Tablettieren, Extrudieren, Co-Extrudieren, Verschäumen, Verspinnen, Beschichten, Granulieren, bevorzugt Sprühgranulieren, Versprühen, Sprühtrocknen oder einer Kombination aus zwei oder mehr dieser Methoden erfolgen.

Ganz besonders bevorzugt werden Pellets und/oder Tabletten hergestellt.

Das Kneten und/oder Verformen kann bei erhöhten Temperaturen wie beispielsweise im Bereich von Raumtemperatur bis 300 °C und/oder bei erhöhtem Druck wie beispielsweise im Bereich von Normaldruck bis hin zu einigen hundert bar und/oder in einer Schutzgasatmosphäre wie beispielsweise in Anwesenheit mindestens eines Edelgases, Stickstoff oder einem Gemisch aus zwei oder mehr davon erfolgen.

Das Kneten und/oder Verformen wird gemäß einer weiteren Ausführungsform unter Zugabe mindestens eines Bindemittels durchgeführt, wobei als Bindemittel grundsätzlich jede chemische Verbindung eingesetzt werden kann, die die zum Kneten und/oder Verformen gewünschte Viskosität der zu verknetenden und/oder verformenden Masse gewährleistet. Demgemäß können Bindemittel im Sinne der vorliegenden Erfindung sowohl Viskositätserhöhende als auch Viskositätserniedrigende Verbindungen sein.

Als unter anderem bevorzugte Bindemittel sind beispielsweise Aluminiumoxid oder Aluminiumoxid enthaltende Binder, wie sie beispielsweise in der WO 94/29408 beschrieben sind, Siliciumdioxid, wie es beispielsweise in der EP 0 592 050 A1 beschrieben ist, Mischungen ais Siliciumdioxid und Aluminiumoxid, wie sie beispielsweise in der WO 94/13584 beschrieben sind, Tonminerale, wie sie beispielsweise in der JP 03-037156 A beschrieben sind, beispielsweise Montmorillonit, Kaolin, Bentonit, Halloysit, Dickit, Nacrit und Anauxit, Alkoxysilane, wie sie beispielsweise in der EP 0 102 544 B1 beschrieben sind, beispielsweise Tetraalkoxysilane wie beispielsweise Tetramethoxysilan, Tetraethoxysilan, Tetrapropoxysilan, Tetrabutoxysilan, oder beispielsweise Trialkoxysilane wie beispielsweise Trimethoxysilan, Triethoxysilan, Tripropoxysilan, Tributoxysilan, Alkoxytitanate, beispielsweise Tetraalkoxytitanate wie beispielsweise Tetramethoxytitanat, Tetraethoxytitanat, Tetrapropoxytitanat, Tetrabutoxytitanat, oder beispielsweise Trialkoxytitanate wie beispielsweise Trimethoxytitanat, Triethoxytitanat, Tripropoxytitanat, Tributoxytitanat, Alkoxyzirkonate, beispielsweise Tetraalkoxyzirkonate wie beispielsweise Tetramethoxyzirkonat, Tetraethoxyzirkonat, Tetrapropoxyzirkonat, Tetrabutoxyzirkonat, oder beispielsweise Trialkoxyzirkonate wie beispielsweise Trimethoxyzirkonat, Triethoxyzirkonat, Tripropoxyzirkonat, Tributoxyzirkonat, Silikasole, amphiphile Substanzen und/oder Graphite zu nennen.

Als viskositätssteigernde Verbindung kann beispielsweise auch, gegebenenfalls zusätzlich zu den oben genannten Verbindungen, eine organische Verbindung und/oder ein hydrophiles Polymer wie beispielsweise Cellulose oder ein Cellulosederivat wie beispielsweise Methylcellulose und/oder ein Polyacrylat und/oder ein Polymethacrylat und/oder ein Polyvinylalkohol und/oder ein Polyvinylpyrrolidon und/oder ein Polyisobuten und/oder ein Polytetrahydrofuran und/oder ein Polyethylenoxid eingesetzt werden.

Als Anteigungsmittel kann unter anderem bevorzugt Wasser oder mindestens ein Alkohol wie beispielsweise ein Monoalkohol mit 1 bis 4 C-Atomen wie beispielsweise Methanol, Ethanol, n-Propanol, iso-Propanol, 1-Butanol, 2-Butanol, 2-Methyl-1-propanol oder 2-Methyl-2-propanol oder ein Gemisch aus Wasser und mindestens einem der genannten Alkohole oder ein mehrwertiger Alkohol wie beispielsweise ein Glykol, bevorzugt ein wassermischbarer mehrwertiger Alkohol, allein oder als Gemisch mit Wasser und/oder mindestens einem der genannten einwertigen Alkohole eingesetzt werden.

Weitere Additive, die zum Kneten und/oder Verformen eingesetzt werden können, sind unter anderem Amine oder Aminderivate wie beispielsweise Tetraalkylammonium-Verbindungen oder Aminoalkohole und Carbonat enthaltende Verbindungen wie etwa Calciumcarbonat. Solche weiteren Additive sind etwa in der EP 0 389 041 A1, der EP 0 200 260 A1 oder der WO 95/19222 beschrieben.

Die Reihenfolge der Additive wie Templatverbindung, Binder, Anteigungsmittel, viskositätssteigernde Substanz beim Verformen und Kneten ist grundsätzlich nicht kritisch.

Gemäß einer weiteren bevorzugten Ausführungsform wird der gemäß Kneten und/oder Verformen erhaltene Formkörper mindestens einer Trocknung unterzogen, die im Allgemeinen bei einer Temperatur im Bereich von 25 bis 500 °C, bevorzugt im Bereich von 50 bis 500 °C und besonders bevorzugt im Bereich von 100 bis 350 °C durchgeführt wird. Ebenso ist es möglich, im Vakuum oder unter Schutzgasatmosphäre oder durch Sprühtrocknung zu trocknen.

Gemäß einer besonders bevorzugten Ausführungsform wird im Rahmen dieses Trocknungsvorgangs mindestens eine der als Additive zugesetzten Verbindungen zumindest teilweise aus dem Formkörper entfernt.

Das erfindungsgemäße metallorganische Gerüstmaterial enthält Poren, insbesondere Mikro- und/oder Mesoporen. Mikroporen sind definiert als solche mit einem Durchmesser von 2 nm oder kleiner und Mesoporen sind definiert durch einen Durchmesser im Bereich von 2 bis 50 nm (Pure & Appl. Chem. 57 (1985) 603-619). Die Anwesenheit von Mikro- und/oder Mesoporen kann mit Hilfe von Sorptionsmessungen überprüft werden, wobei diese Messungen die Aufnahmekapazität der metallorganischen Gerüstmaterialien für Stickstoff bei 77 Kelvin (nach Langmuir) gemäß DIN 66131 und/oder DI N 66134 bestimmt.

Vorzugsweise beträgt die spezifische Oberfläche - berechnet nach dem Langmuir-Modell (DIN 66131, 66134) für das erfindungsgemäße metallorganische Gerüstmaterial in Pulverform mindestens 2600 m²/g, mehr bevorzugt mindestens 2700 m²/g, mehr bevorzugt mindestens 2800 m²/g, weiter mehr bevorzugt mindestens 2900 m²/g, weiter mehr bevorzugt mindestens 3000 m²/g und besonders bevorzugt mindestens 3100 m²/g.

Formkörper aus dem erfindungsgemäßen metallorganischen Gerüstmaterial können eine niedrigere spezifische Oberfläche besitzen; vorzugsweise jedoch mindestens 500 m²/g, mehr bevorzugt mindestens 600 m²/g, weiter mehr bevorzugt mindestens 700 m²/g, insbesondere mindestens 800 m²/g.

Die Porenverteilung gemessen mit Ar nach der BJH-Methode weist vorzugsweise ein Maximum im Bereich von 20 Å bis 50 Å, mehr bevorzugt von 30 bis 45 Å auf.

Die Porosität (mit Ar bestimmt) für alle Poren mit einem Durchmesser < 4026,7 Å liegt vorzugsweise im Bereich von 0,6 bis 1,5 ml/g, mehr bevorzugt 0,8 bis 1,5 ml/g, insbesondere 0,9 bis 1,2 ml/g.

Die Aluminiumverbindung kann durch anodische Oxidation von metallischem Aluminium erzeugt werden. In einem solchen Fall wird das erfindungsgemäße poröse metallorganische Gerüstmaterial auf zumindest teilweise elektrochemischem Wege hergestellt. Verfahren zur elektrochemischen Herstellung von porösen metallorganischen Gerüstmaterialien sind in WO-A 2005/049892 beschrieben. Auch die Erzeugung der Aluminiumverbindung für das erfindungsgemäße poröse metallorganische Gerüstmaterial kann auf diesem Wege hergestellt werden.

Bei der elektrochemischen Herstellung des erfindungsgemäßen porösen metallorganischen Gerüstmaterials ist bevorzugt, dass die kathodische Wiederabscheidung des Aluminiumions durch mindestens eine der folgenden Maßnahmen zumindest teilweise verhindert wird:
(i) Verwendung eines Elektrolyten, der die kathodische Bildung von Wasserstoff begünstigt;
(ii) Zusatz mindestens einer Verbindung, die zu einer kathodischen Depolarisation führt;
(iii) Einsatz einer Kathode mit einer geeigneten Wasserstoffüberspannung.

Das Verfahren kann in einer ungeteilten Elektrolysezelle durchgeführt werden. Speziell geeignete Zellen sind Spaltzellen oder Plattenstapelzellen. Diese können bipolar geschaltet sein. Als Reaktionsmedium eignet sich beispielsweise Methanol, Ethanol, Dimethylformamid, Diethylformamid oder ein Gemisch aus zwei oder mehr dieser Lösemittel.

In dem Reaktionsgemisch kann/können weiterhin ein Leitsalz oder mehrere Leitsalze vorhanden sein. Hierbei kann das Leitsalz als Kationkomponente ein quartäres Ammonium und als Anionkomponente ein Alkoxysulfat aufweisen. Der Gesamtfeststoffgehalt sollte im Bereich von größer oder gleich 0,5 Gew.-% liegen.

Die Umsetzung in dem erfindungsgemäßen Verfahren zur Herstellung des erfindungsgemäßen metallorganischen Gerüstmaterials kann auch auf klassischem Wege erfolgen. Hierbei ist die Aluminiumverbindung typischerweise ein Aluminiumsalz.

Das Aluminiumsalz kann in Form eines Alkoholats, Acetonats, Halegonids, Sulfits, als Salz einer organischen oder anorganischen, Sauerstoff enthaltenden Säure oder einer Mischung davon vorliegen.

Ein Alkoholat ist beispielsweise ein Methanolat, Ethanolat, n-Propanolat, i-Propanolat, n-Butanolat, i-Butanolat, t-Butanolat oder Phenolat.

Ein Acetonat ist beispielsweise Acetylacetonat.

Ein Halogenid ist beispielsweise Chlorid, Bromid oder Iodid.

Eine organische, Sauerstoff enthaltende Säure ist beispielsweise Ameisensäure, Essigsäure, Propionsäure oder andere Alkylmonocarbonsäuren.

Eine anorganische, Sauerstoff enthaltende Säure ist beispielsweise Schwefelsäure, schweflige Säure, Phosphorsäure oder Salpetersäure.

Weiter bevorzugte Aluminiumverbindungen sind anorganische Aluminiumsalze wie Aluminiumchlorid, Aluminiumbromid, Aluminiumhydrogensulfat, Aluminiumdihydrogenphosphat, Aluminiummonohydrogenphosphat, Aluminiumphosphat, Aluminiumnitrat.

Die Aluminiumverbindung kann gegebenenfalls Hydratwasser aufweisen. Bevorzugt sind als Aluminiumverbindung die Hydrate des Chlorids, Nitrats sowie Sulfats, insbesondere das des Chlorids.

Die Umsetzung in dem erfindungsgemäßen Verfahren zur Herstellung des erfindungsgemäßen porösen metallorganischen Gerüstmaterials erfolgt zumindest in Gegenwart eines organischen Lösemittels.

Hierbei können Solvothermalbedingungen eingesetzt werden. Unter dem Begriff "thermal" ist im Rahmen der vorliegenden Erfindung ein Herstellverfahren zu verstehen, bei dem die Umsetzung zum erfindungsgemäßen porösen metallorganischen Gerüstmaterial in einem Druckbehälter derart durchgeführt wird, dass dieser während der Umsetzung verschlossen ist und erhöhte Temperatur angelegt wird, so dass aufgrund des Dampfdruckes von vorhandenem Lösemittel sich ein Druck innerhalb des Reaktionsmediums im Druckbehälter aufbaut.

Vorzugsweise erfolgt die Umsetzung nicht in Wasser enthaltendem Medium und ebenso nicht unter Solvothermalbedingungen.

Die Umsetzung in dem erfindungsgemäßen Verfahren erfolgt demzufolge vorzugsweise in Gegenwart eines nicht-wässrigen Lösemittels.

Die Umsetzung erfolgt vorzugsweise bei einem Druck von höchstens 2 bar (absolut). Vorzugsweise beträgt der Druck jedoch höchstens 1230 mbar (absolut). Insbesondere bevorzugt findet die Umsetzung bei Atmosphärendruck statt. Hierbei kann es jedoch apparativ bedingt zu leichten Über- oder Unterdrücken kommen. Daher ist im Rahmen der vorliegenden Erfindung unter dem Begriff "Atmosphärendruck" derjenige Druckbereich zu verstehen, der sich aus dem tatsächlichen vorliegenden Atmosphärendruck ± 150 mbar ergibt.

Die Umsetzung findet in einem Temperaturbereich von 75°C bis 200°C statt. Vorzugsweise liegt die Temperatur im Bereich von 80°C bis 150°C. Weiterhin bevorzugt liegt die Temperatur in einem Bereich von 85 °C bis 135 °C.

Bei dem erfindungsgemäßen Verfahren beträgt das molare Verhältnis (nach vollst. Zugabe) von Al^{III} und der substituierten aromatischen Dicarbonsäure weniger als 1. Vorzugsweise beträgt dieses Verhältnis weniger als 0,85, insbesondere weniger als 0,7.

Der Al-Gehalt in dem Reaktionsgemisch beträgt dabei vorzugsweise weniger als 0,2 mol/l, mehr bevorzugt weniger als 0,16 mol/l, weiter mehr bevorzugt weniger als 0,1 mol/l und insbesondere weniger als 0,05 mol/l bezogen auf das Gesamtvolumen des Reaktionsgemisches.

Das Reaktionsgemisch kann weiterhin eine Base aufweisen. Dies dient insbesondere dazu, dass bei Einsatz der Carbonsäure als mindestens zweizähniger organischer Verbindung diese leicht löslich ist. Durch die Verwendung eines organischen Lösemittels ist es häufig nicht erforderlich, eine solche Base einzusetzen. Nichts desto trotz kann das Lösemittel für das erfindungsgemäße Verfahren derart gewählt werden, dass dieses als solches basisch reagiert, was jedoch nicht zwingend für die Durchführung des erfindungsgemäßen Verfahrens sein muss.

Ebenso kann eine Base eingesetzt werden. Bevorzugt ist jedoch, dass keine zusätzliche Base eingesetzt wird.

Es ist weiterhin vorteilhaft, dass die Umsetzung unter Rühren stattfinden kann, was auch bei einem Scale-up vorteilhaft ist.

Das (nicht-wässrige) organische Lösemittel ist vorzugsweise ein C₁₋₆-Alkanol, Dimethylsulfoxid (DMSO), N,N-Dimethylformamid (DMF), N,N-Diethylformamid (DEF), N,N-Dimethylacetamid (DMAc), Acetonitril, Toluol, Dioxan, Benzol, Chlorbenzol, Methylethylketon (MEK), Pyridin, Tetrahydrofuran (THF), Essigsäureethylester, gegebenenfalls halogeniertes C₁₋₂₀₀-Alkan, Sulfolan, Glykol, N-Methylpyrrolidon (NMP), gamma-Butyrolacton, alicyclische Alkohole wie Cyclohexanol, Ketone, wie Aceton oder Acetylaceton, Cycloketone, wie Cyclohexanon, Sulfolen oder Mischungen davon. Bevorzugt sind Lösemittel mit einem Siedepunkt von wenigstens 100 °C bei Normalbedingungen.

Ein C₁₋₆-Alkanol bezeichnet einen Alkohol mit 1 bis 6 C-Atomen. Beispiele hierfür sind Methanol, Ethanol, n-Propanol, i-Propanol, n-Butanol, i-Butanol, t-Butanol, Pentanol, Hexanol sowie Gemische davon.

Ein gegebenenfalls halogeniertes C₁₋₂₀₀-Alkan bezeichnet ein Alkan mit 1 bis 200 C-Atomen, wobei ein oder mehrere bis hin zu allen Wasserstoffatomen durch Halogen, vorzugsweise Chlor oder Fluor, insbesondere Chlor, ersetzt sein kann bzw. können. Beispiele hierfür sind Chloroform, Dichlormethan, Tetrachlormethan, Dichlorethan, Hexan, Heptan, Oktan sowie Gemische davon.

Bevorzugte Lösemittel sind DMF, DEF, DMAc oder ein Gemisch davon. Besonders bevorzugt ist DMF.

Der Begriff "nicht-wässrig" bezieht sich vorzugsweise auf ein Lösemittel, das einen Höchstwassergehalt von 10 Gew.-%, mehr bevorzugt 5 Gew.-%, weiterhin mehr bevorzugt 1 Gew.-%, weiterhin bevorzugt 0,1 Gew.-%, besonders bevorzugt 0,01 Gew.-% bezogen auf das Gesamtgewicht des Lösemittels nicht überschreitet.

Vorzugsweise beträgt der Höchstwassergehalt während der Umsetzung 10 Gew.-%, mehr bevorzugt 5 Gew.-% und weiterhin mehr bevorzugt 1 Gew.-%.

Der Begriff "Lösemittel" betrifft reine Lösemittel sowie Gemische von unterschiedlichen Lösemitteln.

Weiterhin kann sich an den Verfahrensschritt der Umsetzung der mindestens einen Metallverbindung mit der mindestens einen mindestens zweizähnigen organischen Verbindung ein Calcinierungsschritt anschließen. Die hierbei eingestellte Temperatur beträgt typischerweise mehr als 250 °C, bevorzugt 300 bis 400 °C.

Aufgrund des Calcinierungsschrittes kann die in den Poren befindliche mindestens zweizähnige organische Verbindung entfernt werden.

Ergänzend oder alternativ hierzu kann die Entfernung der mindestens zweizähnigen organischen Verbindung (Ligand) aus den Poren des porösen metallorganischen Gerüstmaterials durch die Behandlung des gebildeten Gerüstmaterials mit einem nicht-wässrigen Lösemittel erfolgen. Hierbei wird in einer Art "Extraktionsverfahren" der Ligand entfernt und gegebenenfalls im Gerüstmaterial durch ein Lösemittelmolekül ersetzt.

Die Behandlung erfolgt vorzugsweise mindestens 30 Minuten und kann typischerweise bis zu 7 Tagen durchgeführt werden. Dies kann bei Raumtemperatur oder erhöhter Temperatur geschehen. Vorzugsweise erfolgt dies unter erhöhter Temperatur, beispielsweise bei mindestens 40 °C, bevorzugt 60 °C. Weiterhin bevorzugt erfolgt die Extraktion bei der Siedetemperatur des eingesetzten Lösemittels statt (unter Rückfluss).

Die Behandlung kann in einem einfachen Kessel durch Aufschlämmen und Rühren des Gerüstmaterials erfolgen. Es können auch Extraktionsapparaturen wie Soxhlet-Apparaturen, insbesondere technische Extraktionsapparaturen, eingesetzt werden.

Als geeignete Lösemittel können die oben genannten verwendet werden, also beispielsweise C₁₋₆-Alkanol, Dimethylsulfoxid (DMSO), N,N-Dimethylformamid (DMF), N,N-Diethylformamid (DEF), N,N-Dimethylacetamid (DMAc), Acetonitril, Toluol, Dioxan, Benzol, Chlorbenzol, Methylethylketon (MEK), Pyridin, Tetrahydrofuran (THF), Essigsäureethylester, gegebenenfalls halogeniertes C₁₋₂₀₀-Alkan, Sulfolan, Glykol, N-Methylpyrrolidon (NMP), gamma-Butyrolacton, alicyclische Alkohole wie Cyclohexanol, Ketone, wie Aceton oder Acetylaceton, Cycloketone, wie Cyclohexanon oder Mischungen davon.

Bevorzugt sind Methanol, Ethanol, Propanol, Aceton, MEK und Mischungen davon.

Ein ganz besonders bevorzugtes Extraktionslösemittel ist Methanol.

Das verwendete Lösemittel zur Extraktion kann gleich oder verschieden zu demjenigen für die Umsetzung der mindestens einen Metallverbindung mit der mindestens einen mindestens zweizähnigen organischen Verbindung sein. Es ist bei der "Extraktion" nicht unbedingt erforderlich aber bevorzugt, dass das Lösemittel wasserfrei ist.

Ein weiterer Gegenstand der vorliegenden Erfindung ist die Verwendung eines erfindungsgemäßen porösen metallorganischen Gerüstmaterials oder eines Formkörpers dieses enthaltend zur Speicherung oder Trennung von Gasen.

Der Begriff Gas umfasst sowohl Reingase als auch Gasgemische.

Verfahren zur Speicherung mit Hilfe von metallorganischen Gerüstmaterialien im Allgemeinen sind in WO-A 2005/003622, WO-A 2003/064030, WO-A 2005/049484, WO-A 2006/089908 sowie DE-A 10 2005 012 087 beschrieben. Die dort beschriebenen Verfahren können auch für das erfindungsgemäße metallorganische Gerüstmaterial eingesetzt werden.

Verfahren zur Trennung beziehungsweise Reinigung mit Hilfe von metallorganischen Gerüstmaterialien im Allgemeinen sind in der EP-A 1 674 555, DE-A 10 2005 000938 und in der deutschen Patentanmeldung mit der Anmeldenummer DE-A 10 2005 022 844 beschrieben. Die dort beschriebenen Verfahren können auch für das erfindungsgemäße metallorganische Gerüstmaterial eingesetzt werden.

Sofern das erfindungsgemäße poröse metallorganische Gerüstmaterial zur Speicherung eingesetzt wird, erfolgt dies vorzugsweise in einem Temperaturbereich von -200 °C bis +80 °C. Mehr bevorzugt ist ein Temperaturbereich von -40 °C bis +80 °C. Insbesondere ist die Speicherung bei Umgebungstemperatur, wie Raumtemperatur bevorzugt.

Bevorzugte Gase sind Wasserstoff, Erdgas, Stadtgas, Kohlenwasserstoffe, insbesondere Methan, Ethan, Ethin, Acetylen, Propan, n-Butan sowie i-Butan, Kohlenmonoxid, Kohlendioxid, Stickoxide, Sauerstoff, Schwefeloxide, Halogene, halogenide Kohlenwasserstoffe, NF₃, SF₆, Ammoniak, Borane, Phosphane, Schwefelwasserstoff, Amine, Formaldehyd, Edelgase, insbesondere Helium, Neon, Argon, Krypton sowie Xenon.

Besonders bevorzugt handelt es sich bei dem Gas um Kohlendioxid, das aus einem Kohlendioxid enthaltenden Gasgemisch abgetrennt wird. Bevorzugt weist dabei das Gasgemisch neben Kohlendioxid wenigstens H₂, CH₄ oder Kohlenmonoxid auf. Insbesondere weist dabei das Gasgemisch neben Kohlendioxid Kohlenmonoxid auf. Ganz besonders bevorzugt sind Gemische, die wenigstens 10 und höchsten 45 Vol.-% Kohlendioxid und wenigstens 30 und höchstens 90 Vol.% Kohlenmonoxid enthalten.

Eine bevorzugte Ausführungsform ist die Druckwechseladsorption mit mehreren parallelen Adsorberreaktoren, wobei die Adsorbensschüttung ganz oder teilweise aus dem erfindungsgemäßen Material besteht. Die Adsorptionsphase findet für die CO₂/CO-Trennung bevorzugt bei einem CO₂-Partialdruck von 0,6 bis 3 bar und Temperatur von wenigstens 20, jedoch höchstens 70°C statt. Zur Desorption des adsorbierten Kohlendioxids wird der Gesamtdruck in dem betreffenden Adsorberreaktor üblicherweise abgesenkt auf Werte zwischen 100 mbar und 1 bar.

Weiterhin bevorzugt ist die Verwendung des erfindungsgemäßen Gerüstmaterials zum Speichern eines Gases bei einem Mindestdruck von 100 bar (absolut). Mehr bevorzugt beträgt der Mindestdruck 200 bar (absolut), insbesondere 300 bar (absolut). Hierbei handelt es sich besonders bevorzugt bei dem Gas um Wasserstoff oder Methan. Dabei sind insbesondere Drücke für H₂ bis zu 350 bar (absolut), weiterhin bis 700 bar (absolut) sinnvoll.

### Beispiele

### Beispiel 1: Herstellung eines erfindungsgemäßen Al-(NH₂)BDC Gerüstmaterials

5,89 g Aminoterephthalsäure und 4,62 g AlCl₃*6H₂O werden in 250 ml DMF in einem Glaskolben suspendiert (n(Al³⁺) : n(Aminoterephthalsäure) = 0,59), unter Rühren auf 130°C aufgeheizt und 24 h bei diesen Bedingungen gehalten. Der nach ca. 1 h ausgefallene gelbe Niederschlag wird abfiltriert und mit 2x 100 ml DMF und 3 x 100 ml Methanol gewaschen. Anschließend wird der Filterkuchen 16 h bei 100°C im Vakuumtrockenschrank getrocknet (Ausbeute 8,8 g).

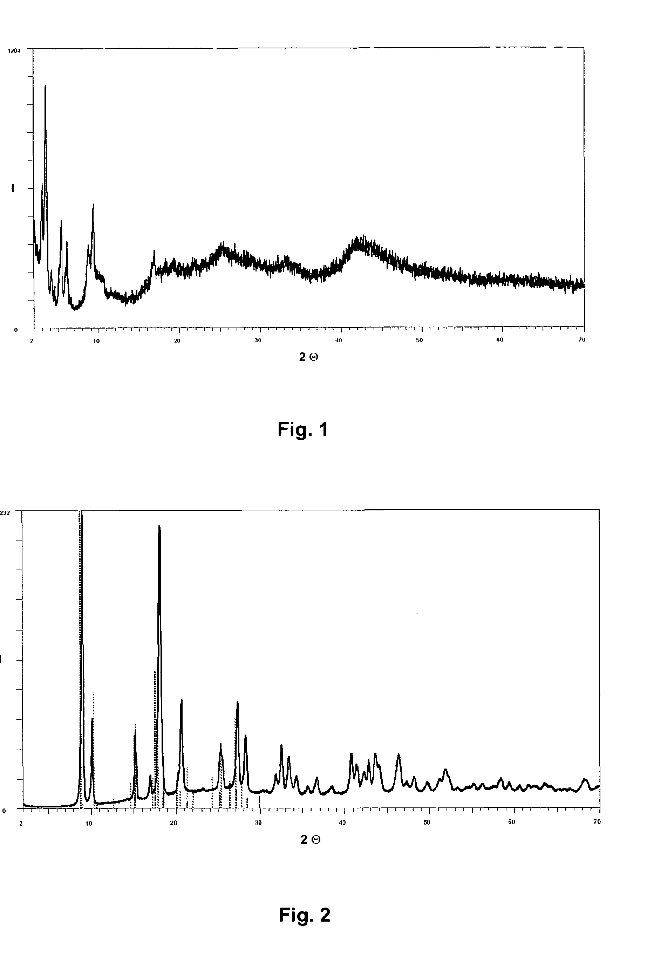

Das Röntgendiffraktogramm (XRD) ist in Fig. 1 zu sehen und unterscheidet sich deutlich von der MIL-53-Struktur. Hierbei ist in Fig. 1 die Intensität I (Lin(Counts)) als Funktion der 2 Theta-Skala (2Θ) dargestellt.

Die höchsten Reflexe mit dem Basisreflex werden bei einem Winkel (2) von 3-4° beobachtet. Die mit N₂ bestimmte Oberfläche (nach Langmuir) beträgt 2888 m²/g.

### Beispiel 2: Herstellung eines erfindungsgemäßen Al-(NH₂)BDC Gerüstmaterials

23,56 g Aminoterephthalsäure und 18,48 g AlCl₃*6H₂O werden in 500 ml DMF in einem Glaskolben suspendiert (n(Al³⁺): n(Aminoterephthalsäure) = 0,59), unter Rühren auf 130°C aufgeheizt und 48 h bei diesen Bedingungen gehalten. Der nach ca. 1 h ausgefallene gelbe Niederschlag wird abfiltriert und mit 2x 200 ml DMF und 3 x 200 ml Methanol gewaschen. Anschließend wird der Filterkuchen 16 h bei 100°C im Vakuumtrockenschrank getrocknet (Ausbeute 22,0 g).

Das XRD gleicht dem aus Bsp. 1 und unterscheidet sich deutlich von der MIL-53-Struktur: Die höchsten Reflexe mit dem Basisreflex werden bei einem Winkel (2) von 3 - 4° beobachtet.

Die mit N₂ bestimmte Oberfläche (nach Langmuir) beträgt 3472 m²/g.

Die Elementaranalyse ergibt folgende Zusammensetzung: Al 8,8 Gew.-%, H 4,7 Gew.-%, C 37,9 Gew.-% und 5,0 Gew.-% N. Weiterhin werden 2,3 Gew.-% Cl gefunden, die auf verbliebene Verunreinigungen aus dem Synthesegemisch zurückgeführt werden. Die Restmenge ist Sauerstoff.

### Vergleichsbeispiel 3: Herstellung eines Al-(NH₂)BDC-MOFs mit MIL-53-Struktur

5,89 g Aminoterephthalsäure und 15,8 g AlCl₃*6H₂O werden in 250 ml DMF in einem Glaskolben suspendiert (Al³⁺ : Aminoterephthalsäure = 2,01), unter Rühren auf 130°C aufgeheizt und 24 h bei diesen Bedingungen gehalten. Der nach ca. 1 h ausgefallene gelbe Niederschlag wird abfiltriert und mit 2x 100 ml DMF und 3 x 100 ml Methanol gewaschen. Anschließend wird der Filterkuchen 16 h bei 100°C im Vakuumtrockenschrank getrocknet (Ausbeute 8,8 g).

Anhand des XRDs lässt sich die mäßig kristalline Substanz als MIL-53-Struktur mit geringfügig veränderter Gitterkonstante identifizieren.

Die mit N₂ bestimmte Oberfläche (nach Langmuir) beträgt lediglich 961 m²/g.

Die Elementaranalyse ergibt folgende Zusammensetzung: Al 14,0 Gew.-%, H 3,8 Gew.-%, C 29,7 Gew.-% und 4,7 Gew.-% N. Weiterhin werden 1,3 Gew.-% Cl gefunden, die auf verbliebene Verunreinigungen aus dem Synthesegemisch zurückgeführt werden. Die Restmenge ist Sauerstoff. Das Al:C-Verhältnis ist bei dieser Struktur deutlich anders als bei Beispiel 2.

### Vergleichsbeispiel 4: Herstellung eines Al-(NH₂)BDC-MOFs mit MIL-53-Struktur

17,7 g Aminoterephthalsäure und 13,8 g AlCl₃*6H₂O werden in 250 ml DMF in einem Glaskolben suspendiert (Al-Gehalt in Synthesegemisch: 0,23 mol/l), unter Rühren auf 130°C aufgeheizt und 3 h bei diesen Bedingungen gehalten. Der nach ca. 1 h ausgefallene gelbe Niederschlag wird abfiltriert und mit 2x 100 ml DMF und 3 x 100 ml Methanol gewaschen. Anschließend wird der Filterkuchen 16 h bei 100°C im Vakuumtrockenschrank getrocknet (Ausbeute 7,9 g).

Anhand des XRDs (Fig. 2) lässt sich die gut kristalline Substanz als MIL-53-Struktur mit geringfügig veränderter Gitterkonstante identifizieren. Die mit N₂ bestimmte Oberfläche (nach Langmuir) beträgt nur 36 m²/g.

Hierbei ist in Fig. 2 auch die Intensität I (Lin(Counts)) als Funktion der 2 Theta-Skala (2Θ) dargestellt.

## Patentansprüche

1. Verfahren zur Herstellung eines porösen metallorganischen Gerüstmaterials enthaltend eine an mindestens ein Metallion koordinativ gebundene mindestens zweizähnige organische Verbindung, wobei das mindestens eine Metallion Al^{III} ist und die mindestens zweizähnige organische Verbindung eine mit mindestens einer Aminogruppe substituierte aromatische Dicarbonsäure ausgewählt aus der Gruppe bestehend aus Terephthalsäure, 2,6-Naphthalindicarbonsäure, 1,4-Naphthalindicarbonsäure, 1,5-Naphthalindcarbonsäure und Derivaten davon ist, bei denen mindestens eine CH-Gruppe im Ring durch Stickstoff ersetzt ist, wobei das Gerüstmaterial in Pulverform eine spezifische Oberfläche nach Langmuir (N₂, 77 K) von mindestens 2500 m²/g aufweist, den Schritt enthaltend
- Umsetzung eines Reaktionsgemisches enthaltend eine Aluminium(III)-Verbindung, eine mindestens zweizähnige organische Verbindung, welche eine mit mindestens einer Aminogruppe substituierte aromatische Dicarbonsäure ist, ausgewählt aus der Gruppe bestehend aus Terephthalsäure, 2,6-Naphthalindicarbonsäure, 1,4-Naphthalindicarbonsäure, 1,5-Naphthalindicarbonsäure und Derivaten davon, bei denen mindestens eine CH-Gruppe im Ring durch Stickstoff ersetzt ist, oder eines ihrer Salze und ein organisches Lösemittel bei einer Temperatur im Bereich von 75°C bis 200°C, wobei das molare Verhältnis von Al^{III} zur substituierten aromatischen Dicarbonsäure kleiner 1 ist.

2. Verfahren nach Anspruch 1, **dadurch gekennzeichnet, dass** das organische Lösemittel N,N-Dimethylformamid, N,N-Diethylformamid, N,N-Dimethylacetamid oder ein Gemisch davon ist.

3. Poröses metallorganisches Gerüstmaterial erhältlich nach einem Verfahren gemäß Anspruch 1 oder 2.

4. Gerüstmaterial nach Anspruch 3, **dadurch gekennzeichnet, dass** die aromatische Dicarbonsäure mit einer Aminogruppe substituiert ist.

5. Gerüstmaterial nach Anspruch 3 oder 4, **dadurch gekennzeichnet, dass** die substituierte aromatische Dicarbonsäure Terephthalsäure oder 2,6-Naphthalindicarbonsäure ist.

6. Gerüstmaterial nach einem der Ansprüche 3 bis 5, **dadurch gekennzeichnet, dass** die aromatische Dicarbonsäure 2-Aminoterephthalsäure ist.

7. Gerüstmaterial nach Anspruch 6, **dadurch gekennzeichnet, dass** der Basisreflex im Röntgendiffraktogramm im Bereich von 2° < 20 < 7° liegt.

8. Formkörper enthaltend ein metallorganisches Gerüstmaterial nach einem der Ansprüche 3 bis 7.

9. Verwendung eines metallorganischen Gerüstmaterials nach einem der Ansprüche 3 bis 7 oder einem Formkörper nach Anspruch 8 zur Speicherung von Gasen.

10. Verwendung eines metallorganischen Gerüstmaterials nach einem der Ansprüche 3 bis 7 oder einem Formkörper nach Anspruch 8 zur Abtrennung von Gasen.

## Claims

1. A process for preparing a porous metal organic framework comprising an at least bidentate organic compound coordinated to at least one metal ion, where the at least one metal ion is Al^{III} and the at least bidentate organic compound is an at least monoamino-substituted aromatic dicarboxylic acid selected from the group consisting of terephthalic acid, 2,6-naphthalenedicarboxylic acid, 1,4-naphthalenedicarboxylic acid, 1,5-naphthalenedicarboxylic acid and derivatives thereof in which at least one CH group in the ring has been replaced by nitrogen, wherein the framework in powder form has a specific surface area determined by the Langmuir method (N₂, 77 K) of at least 2500 m²/g, which comprises the step
- reaction of a reaction mixture comprising an aluminum(III) compound, an at least bidentate organic compound which is an at least monoamino-substituted aromatic dicarboxylic acid selected from the group consisting of terephthalic acid, 2,6-naphthalenedicarboxylic acid, 1,4-naphthalenedicarboxylic acid, 1,5-naphthalenedicarboxylic acid and derivatives thereof in which at least one CH group in the ring has been replaced by nitrogen or one of its salts and an organic solvent at a temperature in the range from 75°C to 200°C, with the molar ratio of Al^{III} to the substituted aromatic dicarboxylic acid being less than 1.

2. The process according to claim 1, wherein the organic solvent is N,N-dimethylformamide, N,N-diethylformamide, N,N-dimethylacetamide or a mixture thereof.

3. A porous metal organic framework which can be obtained by a process according to claim 1 or 2.

4. The framework according to claim 3, wherein the aromatic dicarboxylic acid is substituted by one amino group.

5. The framework according to claim 3 or 4, wherein the substituted aromatic dicarboxylic acid is terephthalic acid or 2,6-naphthalenedicarboxylic acid.

6. The framework according to any of claims 3 to 5, wherein the aromatic dicarboxylic acid is 2-aminoterephthalic acid.

7. The framework according to claim 6, wherein the base reflection in the X-ray diffraction pattern is in the range 2° < 2Θ < 7°.

8. A shaped body comprising a metal organic framework according to any of claims 3 to 7.

9. The use of a metal organic framework according to any of claims 3 to 7 or a shaped body according to claim 8 for the storage of gases.

10. The use of a metal organic framework according to any of claims 3 to 7 or a shaped body according to claim 8 for the separation of gases.

## Revendications

1. Procédé de fabrication d'un matériau de squelette métallo-organique poreux contenant un composé organique au moins bidentate relié coordinativement à au moins un ion métallique, le ou les ions métalliques étant Al^{III} et le composé organique au moins bidentate étant un acide dicarboxylique aromatique substitué avec au moins un groupe amino choisi dans le groupe constitué par l'acide téréphtalique, l'acide 2,6-naphtalinedicarboxylique, l'acide 1,4-naphtalinedicarboxylique, l'acide 1,5-naphtalinedicarboxylique et leurs dérivés, dans lesquels au moins un groupe CH dans le cycle est remplacé par de l'azote, le matériau de squelette sous forme de poudre présentant une surface spécifique selon Langmuir (N₂, 77 K) d'au moins 2 500 m²/g, comprenant l'étape suivante :
- la mise en réaction d'un mélange réactionnel contenant un composé d'aluminium (III), un composé organique au moins bidentate, qui est un acide dicarboxylique aromatique substitué avec au moins un groupe amino choisi dans le groupe constitué par l'acide téréphtalique, l'acide 2,6-naphtalinedicarboxylique, l'acide 1,4-naphtalinedicarboxylique, l'acide 1,5-naphtalinedicarboxylique et leurs dérivés, dans lesquels au moins un groupe CH dans le cycle est remplacé par de l'azote, ou un de leurs sels, et un solvant organique à une température dans la plage allant de 75 °C à 200 °C, le rapport molaire entre Al^{III} et l'acide dicarboxylique aromatique substitué étant inférieur à 1.

2. Procédé selon la revendication 1, **caractérisé en ce que** le solvant organique est le N,N-diméthylformamide, le N,N-diéthylformamide, le N,N-diméthylacétamide ou un de leurs mélanges.

3. Matériau de squelette métallo-organique poreux pouvant être obtenu par un procédé selon la revendication 1 ou 2.

4. Matériau de squelette selon la revendication 3, **caractérisé en ce que** l'acide dicarboxylique aromatique est substitué avec un groupe amino.

5. Matériau de squelette selon la revendication 3 ou 4, **caractérisé en ce que** l'acide dicarboxylique aromatique substitué est l'acide téréphtalique ou l'acide 2,6-naphtalinedicarboxylique.

6. Matériau de squelette selon l'une quelconque des revendications 3 à 5, **caractérisé en ce que** l'acide dicarboxylique aromatique est l'acide 2-aminotéréphtalique.

7. Matériau de squelette selon la revendication 6, **caractérisé en ce que** la réflexion de base dans le diffractogramme de rayons X est dans la plage de 2° < 2θ < 7°.

8. Corps moulé contenant un matériau de squelette métallo-organique selon l'une quelconque des revendications 3 à 7.

9. Utilisation d'un matériau de squelette métallo-organique selon l'une quelconque des revendications 3 à 7 ou d'un corps moulé selon la revendication 8 pour le stockage de gaz.

10. Utilisation d'un matériau de squelette métallo-organique selon l'une quelconque des revendications 3 à 7 ou d'un corps moulé selon la revendication 8 pour la séparation de gaz.
